Europäisches Patentamt

European Patent Office

Office européen des brevets

(11) Publication number: **0 236 608**
**A1**

(12) **EUROPEAN PATENT APPLICATION**

(21) Application number: 86301746.3

(51) Int. Cl.⁴ **F16K 31/34**

(22) Date of filing: 11.03.86

(43) Date of publication of application:
16.09.87 Bulletin 87/38

(84) Designated Contracting States:
AT BE CH DE FR IT LI LU NL SE

(71) Applicant: Mackay, Donald Hugh Campbell
6 Parnell Street
Lower Hutt(NZ)

(72) Inventor: Mackay, Donald Hugh Campbell
6 Parnell Street
Lower Hutt(NZ)

(74) Representative: Godwin, Edgar James et al
MARKS & CLERK 57-60 Lincoln's Inn Fields
London, WC2A 3LS(GB)

(54) Improvements in and relating to water supply systems.

(57) A water supply system for supplying water at a substantially constant low pressure, including a reservoir (2) with an inlet (4) for high pressure water and an outlet (5) for lower pressure water, and an equalising valve assembly (8) coupled to the inlet and having a plurality of passages (21, 22) each of which is individually closable or opened by controlled valve means (23) according to prescribed water level limits in the reservoir; to provide an arrangement in which said passages can be progressively opened so as to admit high pressure water to the reservoir on low pressure water draw off or progressively closed as the reservoir is filled.

FIG.2

## "Improvements in and relating to Water Supply Systems"

This invention relates to water supply systems and is particularly concerned with the provision of a water supply system supplying water at substantially constant low pressure.

Water supply systems for domestic and commercial use may be high or low pressure water systems and actual water pressures in both systems may vary considerably at divers times according to water draw off. In many applications, commercial and domestic, and for example for particular appliances and such as solar water heating systems, variation in water draw off supply pressure is undesirable and may be detrimental to the operation of the apparatus concerned. It is frequently desirable also to have a low pressure water system when the only available supply source is a high pressure water supply system. For example the present invention may be invaluable in a low pressure solar water supply installation where the head or pressure of an existing supply is often higher than is desirable for efficient operation of the collector for the solar system.

Accordingly, an object of this invention is to provide a water supply system by which water at a higher pressure may be admitted and the outlet to the system provides water at a substantially constant low pressure.

Water hammer is a frequent problem in high pressure water systems and another object of the invention is to provide an arrangement alleviating the likely occurrence of noisey and possibly damaging 'water hammer' in a system receiving a fluctuating water pressure and required to supply water at a substantially constant lower pressure.

Other and more particular objects and advantages of the present invention will become apparent from the ensuing description.

According to this invention therefor, there is provided an equalising valve assembly for a water supply system for supplying water at substantially constant low pressure and having a reservoir with an inlet for water supplied at a pressure higher than atmospheric pressure and an outlet for the lower constant pressure water supply, said equalising valve assembly being arranged to be coupled to the inlet so as to control the admission of water at the higher pressure to the reservoir; said equalising valve assembly comprising a body arranged for partial closure of said inlet but having a plurality of passages through which incoming water at the higher pressure can pass into said reservoir, and pressure actuated control means within the body arranged to progressively and individually open and close ports of said passages according to variations in water draw off from the reservoir to maintain substantially constant water levels between prescribed limits within said reservoir.

The invention further provides a water supply system incorporating the equalising valve of the preceding paragraph.

Some preferred aspects of the invention may be described by way of example and with reference to the accompanying drawings, in which:-

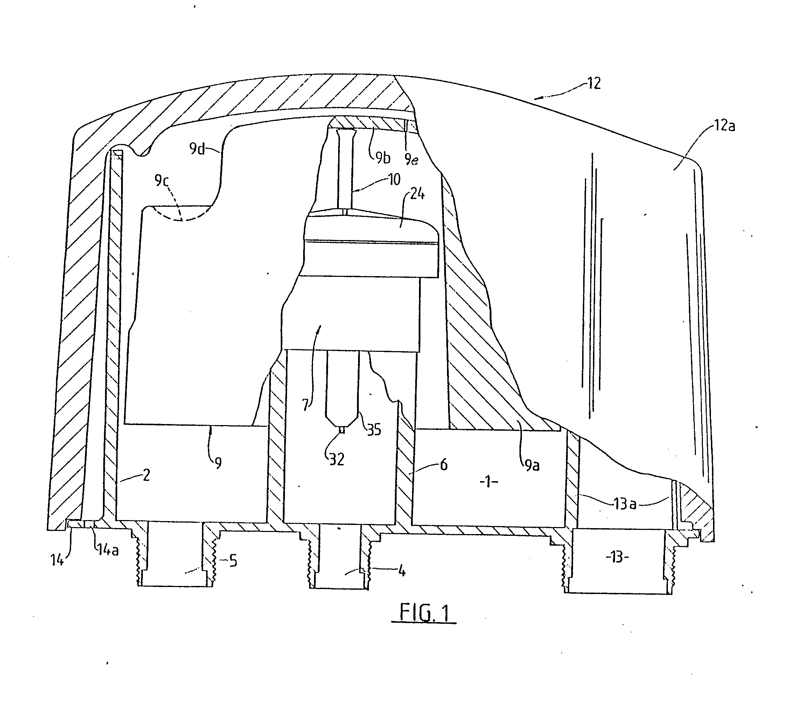

FIGURE 1 : is an assembled part-broken view of one form of the system in accordance with the invention;

FIGURE 2: is a further part-broken and sectioned view of the complete system of figure 1.

FIGURE 3: is a fully sectioned view (on a slightly larger scale) of one preferred form of the principal equalising valve assembly of the invention shown in the static position.

FIGURE 4: is a plan view of one form of a valve body of an removed from the equalising valve assembly, as viewed in the direction of arrows A-A in figure 3

FIGURE 5: is an underside view of the valve body of figure 4, as viewed in the direction of arrows B-B of figure 3.

FIGURE 6: is an underside view of a diaphragm valve assembly of and removed from the equalising valve assembly, as viewed in the direction of arrows C-C in figure 3

FIGURE 7: is a plan view of a support plate member for the diaphragm valve assembly removed from the equalising valve assembly and as viewed in the direction of arrows A-A of figure 3

FIGURE 8: is an underside view of the support plate member of figure 7, as viewed in the direction of arrows C-C of figure 3

FIGURE 9: is an underside view of a capping part of the valve body, removed from the equalising valve assembly and as viewed in the direction of arrows C-C in figure 3, and

FIGURE 10: is an example of a typical application of the present invention to a solar heating water system.

It will be appreciated that the water system in accordance with this invention is not restricted to any particular size and may be made large or small, the reservoir holding any prescribed amount of water, according to a user's requirements. However, a principal aim of the present invention is to make the supply system compact and complete and utilising a minimum of parts, so that the product is readily handled and installed, occupies a minimum of space for storage and transportation purposes, and is capable of being manufactured and sold at a relatively low cost; whilst at the same time the system is versatile and efficient in operation and requires little or no surveillance or maintenance and servicing once installed as a sealed unit.

The apparatus is constructed predominently, preferably, from plastics materials and the reservoir 1 may be of moulded or fabricated rigid plastics materials with a cylindrical upright wall part 2 and a horizontal substantially flat base 3 through which the water inlet and water outlet connections, 4 and 5, extend. Preferably the water inlet connection 4 is centrally disposed and extends co-axially into an inner upright tubular part 6 within the reservoir 1 to have an upper screw-threaded end portion 6a with which a complementary screw-threaded lower boss or collar portion 7a of a main valve body 7 of the equalising valve part (generally indicated by the arrow 8) can be engaged to locate the equalising valve assembly 8 co-axially of the unit. The valve body 7 is also cylindrical (either for its full length or of stepped cylindrical form, as shown with the upper part of larger diameter) and the float member 9 may be in the form of an inverted cup located as a relatively close fit over the cylindrical valve assembly 7 and 8 and within the cylindrical reservoir wall 2. The float member 9 can be manufactured from such as a high density polyurethene foam material so as to have a thick outer wall 9a forming the main body of the float member 9, and a transverse upper wall 9b the lower side of which is arranged to contact and move a pressure relief valve 10 of the equalising valve assembly 8 when the float member 9 moves towards its lower level on water draw off from the reservoir 1; and the upper side of which float member 9 is preferably provided with a recess 9c or plurality of recesses 9c so that weight members such as lead weight members 10 can be inserted therein for weighting of the float member 9 and adjustment of pressure balance according to the pressure of the water at the water inlet 4. The weight recess or recesses 9c can be of annular form to provide a central upstand 9d to the float member 9 facilitating gripping with the fingers of a person assembling, installing or servicing the system. Wall 9b has at least one vent 9e.

The assembly is preferably provided also with a cover 12 which can be manufactured of such as a polyurethene foam for thermal insulation purposes, and it may be further coated with a protective coating such as rubberised coating e.g. a Monolar (Registered Trade Mark) rubberised coating to prevent the polyurethene (or polystyrene) plastics cover 12 from breaking down in adverse weather conditions. The reservoir 1 is also provided with an overflow outlet 13 opening to the upper end thereof and such overflow outlet 13 may be connected to a conduit 13a separately formed and attached to the reservoir 1 or formed in the moulding thereof so that overflow water, in the event of the equalising valve assembly cut-off arrangement not operating correctly, may be directed to waste or to an overflow tray or receiving drain, or returned to a supply source. The cover 12 may have a shaped extension part 12a to extend around and over the conduit part 13a. The base 3 of the reservoir 1 may extend beyond the cylindrical wall 2 to provide an annular flange 14 which can be provided with a plurality of spaced apertures 14a to enable fixing of the reservoir 1 and system as a whole to any supporting bracket or other fixture or structure (not shown) ; and the cover 12 may have its lower peripheral edge portion 12b recessed to accommodate the flange 14 in maintaining the cover 12 as a relatively close fit over the reservoir 1 and flange 14 for good insulation and to prevent leaves and dirt etc. entering the reservoir from outside. Unemployed flange holes 14a provide access for air to the cover and upper side of the reservoir and prevent suction hampering water flow from the unit via outlet 5.

As an example of dimensions, in one form of the invention the reservoir 1 may be in the region of only 200 to 300 millimetres in diameter and 100 to 200 millimetres in height, with the arrangement of the float member 9 and equalising valve assembly 8 providing for a normal maximum water height of approximately one-half the height of the reservoir 1 and a water fall of not more than 25 to 30 millimetres before the equalising valve assembly 8 reaches the fully open position for maximum inflow of water, but the arrangement is such that the equalising valve assembly is re-actuated and progressively opened to permit ingress of the higher pressure water as soon as water is drawn off and the float-member 9 commences to fall, e.g. a 1mm fall will permit initial ingress of water. The inlet connection 4 may be for 14 millimetre or 19 millimetre inside diameter pipe supplying the higher pressure water, and the outlet connection 4 for water draw-off may be for 25 millimetre inside diameter pipe. The float member 9 and equalising valve assembly 6 are arranged and dimensioned to occupy a major portion of the total capacity of the reservoir 1 e.g. in excess of two-thirds, and thus a very compact assembly is provided.

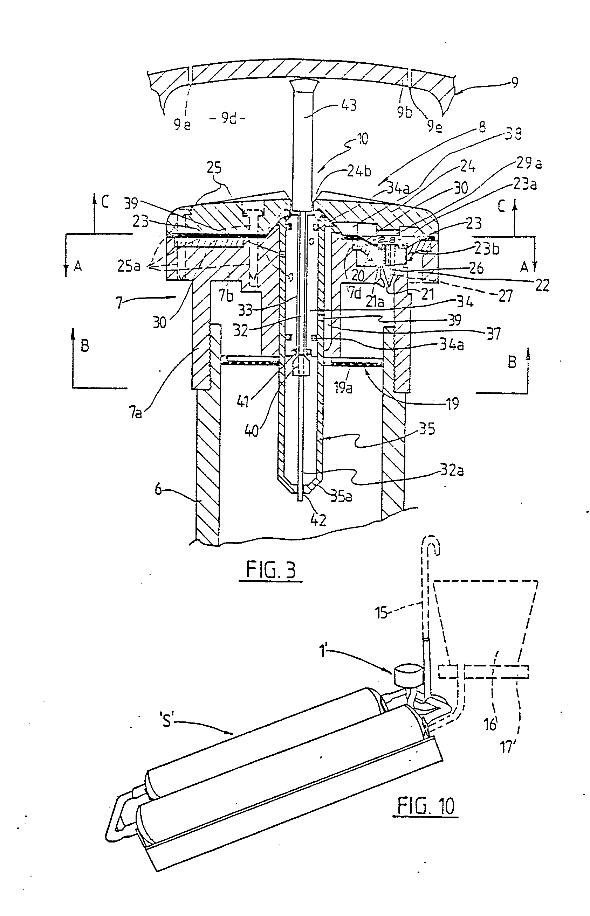

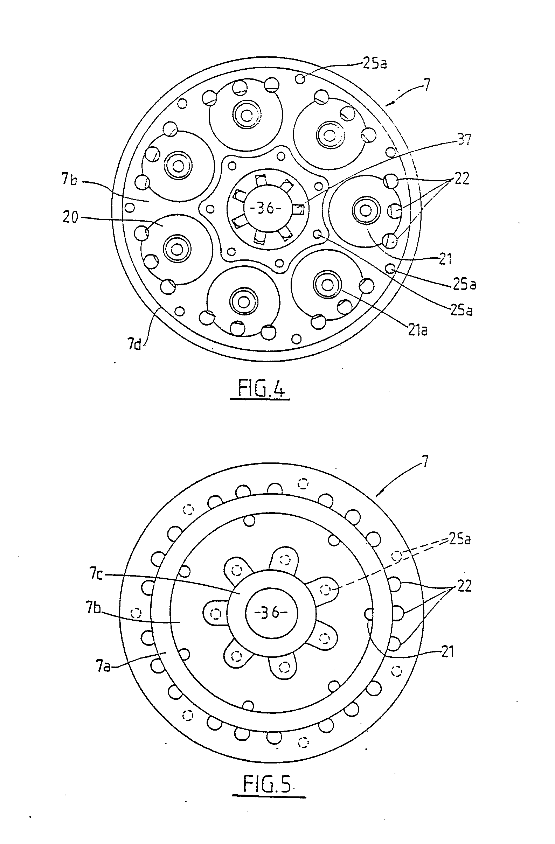

In many domestic and like solar water heating installations, the collector unit (as exampled at 'S' in figure 10 is located on the roof of a building and may be in relatively close proximity to the main hot water header tank in the roof, and it is frequently a requirement that there be either a tall stand pipe or header pipe 15, or a further header tank 16 (as indicated in broken outline in figure 10)for the system and which, as will be appreciated, may be unslightly and will require the addition of a covering and a very strong supporting structure 17. By the present invention, the water pressure conversion unit generally indicated at 1′ may sit neatly and unobtrusively adjacent the solar water system 'S',coupled in line therewith. The most important part of the present invention involves the construction and operation of the equalising valve assembly 8 and reference is now made particularly to figures 3 to 9 inclusive for a more detailed description of the preferred aspects of the present invention.

Simple diaphgram shut -off valves are commonly provided to prevent and restrict such as water flow, with a flexible diaphragm member closing on or opening away from one or more water flow openings, according to pressure either side of the valve. The present invention goes further by employing a diaphragm type of valve arrangement incorporating bleed means to initiate action and further providing for progressive individual opening and closing of water passages to stabilise water pressure and more positively regulate flow to eliminate or substantially alleviate water hammer, such as frequently occurs in high pressure water and fluctuating pressure water systems.

Accordingly, in the present invention the valve body 7 (shown particularly in figures 3,4 and 5) has an upper transverse wall part 7b from which the outer cylindrical boss or collar part 7a depends for screw-threaded engagement with the tubular inlet upstand 6 of the reservoir 1, and a central co-axial part 7c depends from the transverse part 7b to form an annular space 18 between such depending central part 7c and the collar part 7a and tubular upstand upper portion 6a for the inflow of the higher pressure water to the equalising valve assembly 8. Preferably an annular disc-like filter and flow diffuser member 19 is mounted at the lower end of the valve body 7 within the upper part 6a of the tubular upstand 6 to prevent extraneous matter in the water inlet supply entering the equalising valve assembly 8 and to further diffuse the high pressure flow of incoming water and facilitate the smooth operation of the equalising valve assembly 8. The filter diffuser member 19 may take various forms and can for example be of a simple metal mesh form or the filter diffuser member 19 can be specially fabricated e.g. such as by injection moulding froma suitable rigid setting high quality plastics material, with a plurality of perforations but preferably with a plurality of co-axial annular slots 19a, (conjoined for strength at intervals by radial rib parts) and preferably with the slots 19a (or perforations if provided) of substantially V-shape in cross-section with the wider open side uppermost to prevent the entrapment of dirt particles or other extraneous matter on the pressure side of the system and blocking of the filter diffuser member.

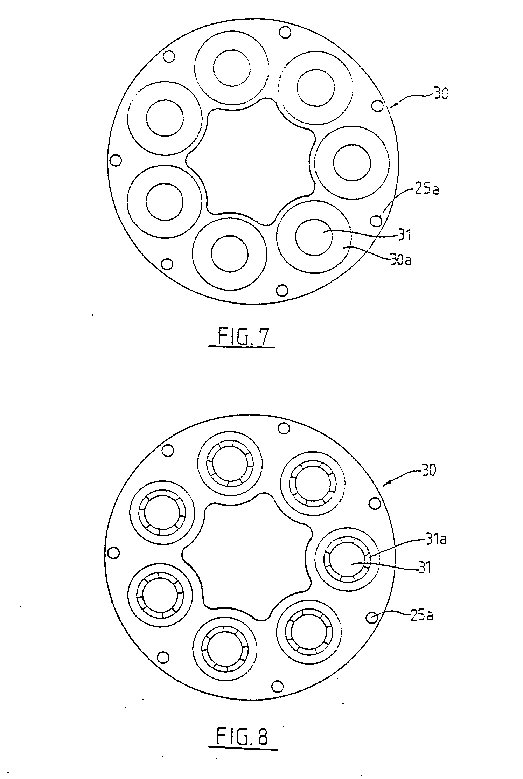

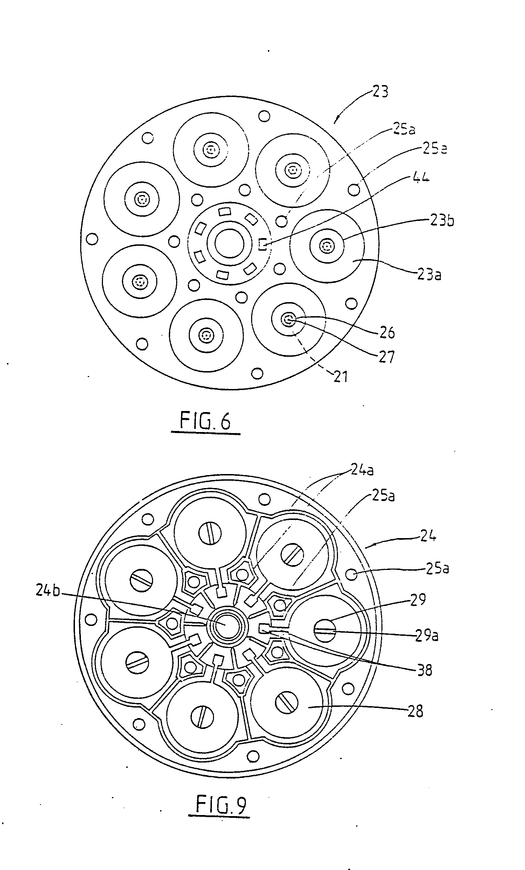

In the preferred construction, the upper transverse part 7b of the valve body 7 is of larger diameter than the lower tubular collar part 7a so as to project laterally therefrom, and the upper side of the valve body transverse part 7b is provided with a plurality of equally spaced substantially circular recesses 20 located on the same concentric axis near,but to the inner side of,the junction between the tubular collar part 7a and the transverse part 7b; each such recess 20 being provided with a co-axial bore 21 opening to the inner side of the tubular collar part 7a and thus to incoming water under higher pressure in the tubular upstand 6 of the inlet 4, and at least one but preferably a plurality (e.g. three) of outer apertures 22 opening to the outer under side of the tubular collar and thus communicating with the interior of the reservoir 1; so that with the apertures 21,22 unrestricted water can flow from the inlet 4 through the tubular upstand 6, filter diffuser member 19 and tubular collar part 7a, and into the reservoir 1. However, the inner co-axial bores 21 open to valve seats 21a within the recesses 20 and which are capable of being closed individually by valve parts 23a of a unitary diaphragm valve assembly 23 (see figures 3 and 6) which is clamped in position between the valve body transverse part 7a and an upper capping part 24 (see figures 3 and 9), such as by securing screws 25 located in aligned holes 25a of the capping and body parts, with the holes 25a in the body part transverse part 7b being screw-threaded to receive such screws 25. The diaphragm valve assembly 23 comprises a circular (in plan) member constructed primarily of a natural or synthetic rubber material and preferably pre-shaped with a plurality of frusto-conical parts 23a dimensioned and positioned so as to locate over and project downwardly into each of the recesses 20 of the valve body transverse part 7b, and arranged so that the lower end portions of each such depending frusto-conical parts 23a has a thickened depending cylindrical valve part 23b capable of engaging and sealing on the respective valve seat 21a, which may be in the form of an inner annular upstanding lip 21a, of each recess 20. Each such central depending valve part 23b of the diaphragm concial parts 23a is provided with a fine bleed means for the purpose hereinafter described, and in one preferred form of the invention and as illustrated each such diaphragm valve part 23b is fitted with a nipple insert 26 of a hard plastics material such as a nylon and which may have a depending co-axial conical head 26a projecting into the respective co-axial bore (facilitating correct location of the respective diaphragm valve part 23b on its seat and reinforcing such valve part 23 against distortion to lessen the risk of leakage), and a fine co-axial bleed bore 27 extends fully through such reinforcing diaphragm nipple 26 to provide communication between the inner side of the valve body tubular collar part 7a and the upper side of the diaphragm frusto-conical part below the capping part 24. The capping part 24 is provided on its underside with a plurality of recesses 28 complementary to and alignable with the recesses 20 of the body transverse part 7b and the frusto-conical diaphragm valve parts 23a; and each such capping part recess 28 is provided with a co-axial depending abutment 29 against which the upper central portion of the diaphragm valve frusto-conical part 23a and the upper end of the nipple insert 26 can abut to restrict upward movement thereof whilst permitting water and/or air flow in the annulus formed about such central depending abutment 29 within each capping part recess 28. The depending abutment 29 may be provided with a medial transverse openended slot 29a which aligns with the bleed bore 27 of the nipple insert 26 so that liquid or air flow therethrough is not restricted at any time.

Further reinforcement or support and stabilizing of the flexible diaphragm valve member frustoconical parts 23a at the recesses 20 and valve apertures 21 can be provided by way of an intermediate diaphragm support plate 30 (see now figures 3,7 and 8) in the form of an annular disc like member which locates within a concentric annular recess 7d in the upper side of the valve body transverse part 7b over the individual valve recesses 20; and such support plate 30 is provided with a plurality of equally spaced apertures 31 positioned on a concentric pitch circle and corresponding in number to the number of valve apertures 21 and recesses 20; and each of a diameter such that the respective depending cylindrical valve parts 23b of the diaphragm member 23 can slidably locate therein and be maintained in the correct position on its respective valve seat or lip 21a. The upper side of the support plate 30 may be provided with a conical recess 30a at each such guide aperture 31 and conforming to the normal configuration of the frusto-conical diaphragm part 23a engageable therewith; and part cylindrical gapped projections 31a may extend below the guide apertures 31 as extensions thereof in supporting the respective diaphragm cylindrical valve parts 23b through the major part of their movement and onto the respective valve seats or lips 21a without restricting water flow through the inlet and outlet apertures 21 and 22 of the valve recesses 20 in the valve body transverse part 7b when the diaphragm valve parts 23b are open.

To prevent lateral water leakage across the diaphragm 23 between the frusto-conical valve parts 23a and ensure good sealing elsewhere, the body capping part 24 can be provided on its underside with a uniform height continuous small projecting rib 24a which will press tightly into the diaphragm 23 when sandwiched between the body 7, support plate 30 and capping part 24.

The equalising valve assembly 8 further includes an actuating pressure relief valve and flow regulating assembly 10 comprising a vertically and co-axially disposed needle valve having a stem 32 located in a clearance co-axial bore 33 of a cylindrical piston member 34 for limited vertical movement within such piston member 34; the piston member 34 being in turn slidably located and sealed within a co-axial cylindrical tube piston sleeve 35 mounted within a co-axial bore 36 the body central part 7c and depending downwardly therefrom into the inlet tubular upstand 6 of the complete assembly. The bore 36 of the valve body 7 in which the piston sleeve 35 is located is provided with a plurality of parallel vertically and longitudinally positioned channels 37 corresponding to the number of diaphragm valves 23a,23b and recesses 20,28; with such channels 37 being closed at their lower end and opening at the upper end for communication with aligned apertures and channels 38 in the body capping part 24 which in turn provide communication with the respective body capping part recesses 28 to the upper side of the diaphragm frusto-conical valve parts 23a. The piston sleeve 35 is provided along its length with a plurality spaced of small flow control apertures 39 corresponding in number to and aligned with the longitudinal channels 37 within the valve body 7 and within the confines of the piston member 34 when in its uppermost position. The piston member 34 is an elongate member with upper and lower seal rings 34a positioned such that in the normal uppermost position indicated the flow control apertures 39 in the piston sleeve 35 are located between the seals 34a to prevent the passage of air therethrough; and when in the lowest position when the reservoir 1 is empty or near empty and the float member 9 at its lowest position causing the needle valve assembly 10 to be moved to its lowest position, the piston sleeve flow control apertures 39 will be open to atmosphere. The needle valve has its needle stem 32 extending longitudinally through the piston member 34 as aforesaid to have a valve member 40 located at the lower end of the piston member 34 and capable of sealing against a valve seat or such as an O-ring seal 41 about the needle bore 33 of the piston member 34. The lower end part 32a of the needle stem 32 may project downwardly and through a clearance aperture 42 in an otherwise closed lower end 35a of the piston sleeve 35 (the diameter of such aperture permitting water under pressure to bleed therethrough but being fine enough to prevent the passage of unwanted extraneous matter or dirt particles). An enlarged pin or start-cap extension 43 projects upwardly from the upper end of the needle stem 32 above the piston member 34 and through central clearance apertures in the diaphragm 23 and valve body capping part 24, so that its upper end can freely abut the inner under side of the float member recess 9d whereby the float member 9 is free to move upwardly on filling the reservoir 1 with water and at the same time is arranged to engage the start pin or cap 43 of the needle valve to move the needle valve assembly 10 downwardly on any water draw-off and lowering of the float member 9 below the prescribed level. The arrangement is such that there need only be a small gap e.g. in the region of a millimetre, between the upper side of the piston member 34 and lower end of the start pin or cap extension 43 so that on initial downward movement of the float member 9 on water draw-off from the reservoir 1 the needle stem 32 and attached needle valve 40 will be moved fractionally downwardly sufficient to open the lower end of the needle passage 33 of the piston member 34 to the water under pressure in the tubular inlet upstand 6 and lower part of the piston sleeve 35 to allow initial pressure release and actuation of the equalising valve assembly 8 as hereinafter described.

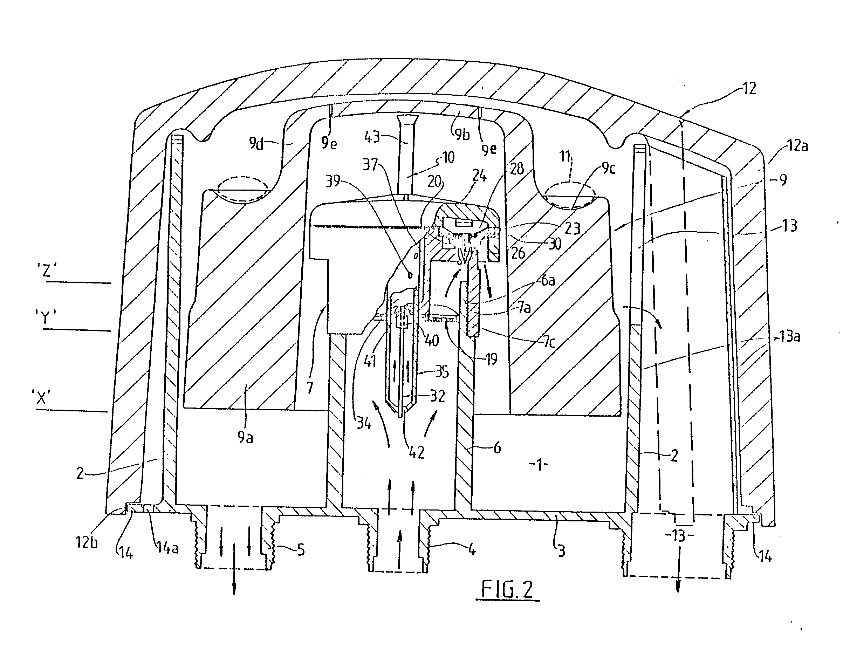

On initial installation of the apparatus in accordance with this invention, or commencement of use of the system with the reservoir 1 empty or near empty and with the float member 9 and needle valve assembly 10 at their lowest levels ("X" in fig.2 indicating low water level), on inflow of water under pressure via inlet 4 and into the tubular sealed upstand 6, the water under pressure will pass through the filter member 19 to the interior of the valve body 7 within the tubular collar part 7a and in the absence of any resistance to the upper side of respective ones of the diaphragm valve parts 23a, 23b the water pressure will lift the diaphragm valve parts 23a,23b in their respective recesses and clear of their respective valve lip seats 21a to permit the full flow of water through the apertures 21 and 22 communicating with the respective valve recesses 20 to fill the reservoir 1. At the same time, the initial water pressure will raise the needle valve 40 to close on the seat or seal 41 at the lower end of the piston 34 and seal off the needle bore 33 of the piston member 34; and thereupon the water under pressure will act on the lower side of the needle valve piston member 34 to urge the needle valve assembly 10 upwardly so as to rise with the rising of the float member 9 as the reservoir 1 is filled, the upper end of the needle start pin or cap 43 abuting the underside of the float member 9 within its recess 9d. Initially, there is no resistance by the diaphragm assembly 23 as it is open to atmospheric air pressure communicating by way of the valve body channels 37 and communicating piston sleeve flow control apertures 39 initially located above the uppermost seal 34a of the piston member 34, and once the diaphragm valve members 23a, 23b are in the open position they remain that way during filling of the reservoir 1 to the prescribed level. On the needle valve assembly 10 and piston member 34 rising with the float member 9, the piston sleeve flow control apertures 39 are progressively sealed off, and at the same time there is a slight bleed of water under pressure through the bleed bores 27 of the diaphragm valve insert nipples 26 into the recesses 28 above the frusto-conical diaphragm valve parts 23a and within the valve member capping part 24. This bleed contines until such time as the pressure above the diaphragm valve parts 23a,23b equalises with the pressure below and within the tubular upstand 6, and the diaphragm valve members or parts 23b will be able to close on their respective lip seats 21a under the inherent spring influence of the diaphragm material; at which stage the float member 9 and valve assembly 8 will be in the static non-flow position shown in the drawings with water being at level Y within the reservoir 1. Level Z indicates the overflow position where excess water may pass through the overflow outlet 13 -this should rarely occur unless there is slowness in action in sealing of the valve assembly 8 for some reason.

When low pressure water is drawn off through the outlet 5 of the reservoir 1, the float member 9 will accordingly commence to lower and on contacting the upper end of the needle start pin or cap 43 (there can be a small gap between the float member and needle start pin or cap to allow "lost time" and for water evaporation etc. before commencement of refilling of the reservoir 1) and the needle valve 40 will be opened initially (as mentioned this can be within one millimetre of downward movement of the needle valve assembly 10) to allow water under pressure to pass through the needle bore 33 of the piston member 34 to the upper side of the diaphragm valve parts 23a,23b via the connecting channels 37,38 and recesses 28 (in the illustrated form of the invention the central part of the diaphragm assembly 23 is of frusto-conical form and locates over the upper end of the piston sleeve 25 and between the central parts of the valve body 7 and valve body capping part 24, and accordingly appropriate communicating apertures 44 can be provided in the diaphragm member communicating with the respective channels 37,38 and recesses 28).

The flow control or regulating apertures 39 in the piston sleeve 35 are equally spaced circumferentially but at different levels longitudinally of the piston sleeve 35 so that as the piston 34 slides downwardly with the needle valve assembly 10 and within the piston sleeve 35, the flow control apertures 39 are gradually uncovered in sequence so that initially, when the uppermost aperture 39 is exposed from sealing by the piston member 34, the water in the capping part recess 28 at the upper side of the first diaphragm frusto-conical and valve parts 23a,23b becomes exposed to normal air pressure through the central aperture 24b of the capping member 24 thus relieving the pressure on such upper side and enabling water pressure from within the tubular upstand 6 to exert force on the under surface of the valve insert nipple 26 and valve part 23b of the diaphragm 23 to permit water under pressure to pass through the communicating openings into the reservoir 1 for first trickle filling. With greater water draw-off the needle valve assembly 10 will continue to lower and the piston 34 will sequentially expose more of the flow control apertures 39 to atmosphere for progressive opening of the series of valve parts 23b to increase water flow into the reservoir 1 and so that with full outlet flow and lowering of the water level to its lowest point all the diaphragm valve parts 23b will be off their respective seats 21a enabling full inlet water under pressure to be fed into the reservoir 1 causing the float member 9 and needle valve assembly 10 to rise and progressively close off the flow control apertures 39 for smooth operation of the system. Whilst the flow control apertures 39 can be positioned in a spiral manner about the piston sleeve 35 so that the respective diaphragm valve parts 23b are opened in direct adjacent series, preferably the arrangement provides for staggered formation of the flow control apertures for staggered opening and closing of the diaphragm valve parts 23b e.g. if for example there are, as illustrated, seven individual diaphragm frusto-conical and valve parts 23a,23b in the diaphragm valve assembly 23, with equivalent numbers of flow control apertures 39 and connecting channels 37 etc., and the valve parts 23b are number 1 to 7 in series, the opening or closing sequence could be 1,5,2,6,3,7, 4, or some other suitable staggered sequence. Further, control of the water flow and valve actuation may be achieved by having different diameters for the co-axial inlet bores 21 for the respective valve recesses 20 in the body part 7 e.g. the diameters of such bores 21 may progressively increase equally in series, or in staggered relationship. Experiments with prototype systems and equalising valve assemblies in accordance with this invention and as described and illustrated have proved highly successful in providing constant low pressure water supply from an originating higher pressure water supply, problem free and without the water hammer commonly experienced in conventional high pressure/low pressure water supply systems.

It will be appreciated that the system is not confined to one having the illustrated seven individual water passage and valve arrangement, but any number can be provided and may be preferred according to the required size and capacity of the system. Whilst the system may perform reasonably well in some situations with only 2, 3 or 4 water passage and valve arrangements, a higher number (e.g. 5, 6, 7 or 8) will generally provide for smoother more effective operation.

Thus, by this invention, there is provided an improved and compact pressure adjusting system enabling water under high or uneven pressure at an inlet source to be converted to a substantially constant low pressure supply at the outlet 5; the arrangement providing that the reservoir contains a relatively small amount of water, and discharge through the outlet 5 of a small amount of water effects the required amount of float movement for actuation of the equalising valve assembly 8 so that there is a continual trickle or frequent intermittent supply of high pressure water providing a constant supply of substantially constant low pressure outgoing water.

The preferred manufacture of the unit in plastics materials and with the preferred formed plastics cover 12 and float member 9, guard against freezing of the water in the system for most situations in which it is likely to be used; and in the event of any freezing there is little likelihood of the unit being damaged and will operate effectively and efficiently again on thawing.

By the provision of a small and compact unit, and as before-mentioned, considerable advantages are gained in costs, transport and storage; and the unit or system is easily fitted and handled by a plumber.

It will be appreciated also that the use of the invention is not confined to solar water systems, but may have many other applications. It is envisaged for example that the invention may be particularly usefully employed in high rise building situations such as in large hotel, condominium and flat complexes served by main roof-top water header tank systems; in such complexes and systems, water supply pressures at the different floor levels will normally vary according to their height and relativity to the header tank system concerned, and vary at the individual units of the complexes with water draw-off at other units. Accordingly, a single water supply system of the present invention can be installed at the various floor levels for supply of water to all or group of units on the respective floors, and/or individual supply systems can be provided for the units of a complex. As previously indicated the system of this invention is not restricted to any particular size and the water pressure at the outlet side of the system can be readily varied accordingly to a users requirements such as by internal port and water passage size variation and the employment of interchangeable parts.

Further, the drawings and aforegoing description indicate the employment of a particular form of inverted cup-like float member 9 which locates over the equalising valve assembly 7 in providing one version of a complete compact system. It will of course be appreciated that an alternative float construction can be utilised and positioned adjacent or in some other position relative to the equalising valve assembly 7 and arranged to actuate the pressure relief and control valve means i.e. engage and move the pin 43 and piston member 34, directly or indirectly such as by way of lever and/or linkage mechanism.

Particular forms of the invention have been described and illustrated by way of example, but it will be appreciated that other variations of and modifications to the invention can take place without departing from the scope of the appended claims.

**Claims**

1. An equalising valve assembly for a water supply system for supplying water at substantially constant low pressure and having a reservoir with an inlet for water supplied at a pressure higher than atmospheric pressure and an outlet for the lower constant pressure water supply, said equalising valve assembly being arranged to be coupled to the inlet so as to control the admission of water at the higher pressure to the reservoir; said equalising valve assembly comprising a body arranged for partial closure of said inlet but having a plurality of passages through which incoming water at the higher pressure can pass into said reservoir, and pressure actuated control means within the body arranged to progressively and individually open and close ports of said passages according to variations in water draw off from the reservoir to maintain substantially constant water levels between prescribed limits within said reservoir.

2. An equalising valve assembly as claimed in claim 1 wherein said valve body defines a plurality of inner valve chambers corresponding in number to the number of said passages and located in spaced relationship substantially sealed one from each other, said passages being each arranged with one end opening to said inlet and the other end with a port opening to a respective one of said valve chambers, and each said port being closable by a valve member normally biassed towards the closed position; the plurality of valve members forming part of said pressure actuated control means, and each of said valve chambers being arranged for communication with said reservoir for the passage of water into said reservoir on opening of the respective valve member against said bias.

3. An equalising valve assembly as claimed in claim 2 wherein each said valve chamber is divided into first and second chamber parts by divider means, said first chamber part being the part arranged to provide communication between the respective port and the reservoir for the passage of water, and said second chamber part being arranged to be open to atmospheric pressure when the water level in the reservoir is within prescribed limits, there being varying prescribed limits for the plurality of valve chambers and communicating passages; and there being bleed means between said first and second chamber parts of each valve chamber enabling the passage of a small proportion of the higher pressure inlet water to bleed from the first chamber part to the second chamber part and subsequent equalising of pressure between said first and second chamber parts on sealing of said second chamber part from atmospheric pressure when the reservoir water level reaches or exceeds said prescribed limits, each said valve member being closable under its bias to prevent water flow through the respective valve chamber and into the reservoir on equalising of pressure in the respective chamber first and second parts.

4. An equalising valve assembly as claimed in claim 3 wherein said bleed means is provided by way of a small bore extending through each valve member.

5. An equalising valve assembly as claimed in claim 3 or claim 4 wherein said divider means is a flexible diaphragm member incorporating or provided with the valve member for closing the respective port of each valve chamber.

6. An equalising valve assembly as claimed in claim 5 wherein said flexible diaphragm member is of a resilient material and shaped within the respective valve chamber to have a substantially frusto-conical form with its small end part directed towards said port for sealing engagement thereat under the inherent spring bias of the material on there being equalised pressure between said first and second chamber parts or when the pressure on second chamber part side of the diaphragm member is greater than the pressure on the first chamber part side.

7. An equalising valve assembly as claimed in claim 5 or claim 6, wherein said valve body includes a main body part and a capping part with mating face wall portions, said main body part face wall portion being recessed to define said first chamber parts and said capping part being recessed to define said second chamber parts, and wherein said flexible diaphragm member for each valve chamber is part of a single common diaphragm member of the equalising valve assembly sealingly mounted between said mating face portions of the main body and capping parts.

8. An equalising valve assembly as claimed in claim 7, wherein said body part is of substantially cylindrical form with the plurality of valve chambers located in spaced relationship on a concentric pitch circle about the axis of the body part, said capping part and mating face wall portions being disposed in planes substantially normal to said axis.

9. An equalising valve assembly as claimed in any one of claims 3 to 7 inclusive wherein said pressure actuated control means further comprises an elongate cylindrical piston member slidally located within a cylindrical bore of the body part said bore being open to atmospheric pressure at one end and substantially closed at the opposite end, said body part being provided with a plurality of further passages leading one each to said second chamber parts and to a further port opening through the cylindrical bore wall; the plurality of further ports being grouped but spaced longitudinally of said bore so as to be progressively opened to atmospheric pressure as the piston member moves towards the bore closed end or progressively closed off as the piston member moves towards the open end, movement of said piston member towards the bore closed end being controlled by fall of the water in the reservoir and there being further bleed means enabling a small proportion of the higher pressure inlet water to enter said bore at the closed end part thereof for movement of the piston member towards the opposite end of the bore.

10. An equalising valve assembly as claimed in claim 9 wherein said piston member has an open ended co-axial bore extending longitudinally therethrough, and a valve seat provided at the end of the piston member directed towards the substantially closed end of the piston member bore; there being a further valve member mounted so as to be closable on said seat on higher pressure water being admitted to said bore, and said further valve member having a stem extending through and beyond said piston member bore to have an outer end part connected to a co-axial thrust pin projecting beyond said capping part; said thrust pin being located through a clearance aperture in the capping part and being movable inwardly thereof to initially move and open said further valve member against the higher pressure inlet water in the body part bore, and being movable further inwardly by float means of the reservoir falling with water draw off from said reservoir to effect movement of said piston member towards said substantially closed end of the body part bore in progressively opening said further ports to atmospheric pressure and permit progressive opening of the valve members in the valve chambers for the controlled admission of higher pressure inlet water to said reservoir.

11. A water supply system for supplying water at substantially constant low pressure, comprising a reservoir having an inlet for water supplied at a pressure higher than atmospheric pressure and an outlet for the lower constant pressure water supply, and an equalising valve assembly according to any one of the preceding claims coupled to the inlet so as to control the admission of water at a higher pressure to the reservoir via the equalising valve assembly; and said reservoir contains a float member which is arranged to effect actuation and controlled movement of said pressure actuated control means of the equalising valve assembly.

12. A water supply system for supplying water at substantially constant low pressure, comprising a reservoir having an inlet for water supplied at a pressure higher than atmospheric pressure and an outlet for the lower constant pressure water supply, an equalising valve assembly coupled to the inlet and having a plurality of valve chambers and connecting passages within a body part of said assembly, said body part incorporating a pressure actuated control valve means which is arranged to be progressively actuated and opened by a float member in the reservoir on the water level in the reservoir falling below a prescribed level to sequentially open a valve member in each valve chamber so as to progressively permit water at the higher pressure to be admitted to the reservoir via the respective passages and connecting valve chambers of the equalising valve assembly, said pressure actuated control valve means being arranged to progressively close on the volume of water in the reservoir rising to allow pressure build-up in the valve assembly and cut-off of water supply to said inlet to maintain substantially constant water levels between prescribed limits within said reservoir; each said valve chamber being divided into first and second chamber parts by divider means with each said first chamber part being arranged to provide communication between the respective passage of the assembly body part and the reservoir for the passage of water, and each said second chamber part being arranged to be open to atmospheric pressure when the water level in the reservoir is within prescribed limits, there being varying prescribed limits for the plurality of valve chambers and communicating passages; and there being bleed means between said first and second chamber parts of each valve chamber enabling the passage of a small proportion of the higher pressure inlet water to bleed from the first chamber part to the second chamber part of each valve chamber and subsequent equalising of pressure between said first and second chamber parts on sealing of said second chamber part from atmospheric pressure when the reservoir water level reaches or exceeds said prescribed limits, each said valve member being closable under a bias to prevent water flow through the respective valve chamber and into the reservoir on equalising of pressure in the respective chamber first and second parts of that valve chamber.

13. A water supply system as claimed in claim 11 or claim 12 wherein said reservoir has a base part with a tubular upstand co-axially supporting said equalising valve assembly at its upper end and having the reservoir inlet opening to the lower end, and said float member is a weighted float member in the form of an annulus located about said upstand to have an upper transverse end part arranged to engage and control movement of a projection controlling operation of said pressure actuated control means of the equalising valve assembly on rise and fall of the water level in said reservoir.

14. A water supply system as claimed in claim 12 or claim 13 wherein said reservoir is in the form of a substantially cylindrical open topped vessel and has an outwardly directed peripheral support flange part at the base thereof, there being a substantially cylindrically walled cover member extending over said reservoir vessel in spaced relationship therefrom and supported at its lower end peripheral by said support flange part, said flange part being apertured for the admission of air to the reservoir.

15. A water supply system as claimed in claim 14 and wherein the reservoir vessel and cover member are arranged and constructed substantially as hereinbefore described with reference to figures 1 and 2 of the accompanying drawings.

16. A water supply system as claimed in any one of claims 11 to 15 and wherein the float member is arranged and constructed substantially as hereinbefore described with reference to figures 1 and 2 of the accompanying drawings.

17. An equalising valve as claimed in any one of claims 1 to 10 inclusive, or a water supply system as claimed in any one of claims 11 to 16 inclusive, wherein said pressure actuated control means of the equalising valve is arranged, constructed and operated substantially as hereinbefore described with reference to figures 1, 2 and 3 of the accompanying drawings.

18. An equalising valve for a water supply system supplying water at a substantially constant low pressure, wherein said equalising valve assembly is arranged, constructed and operable substantially as hereinbefore described with reference to the accompanying drawings.

19. A water supply system for supplying water at a substantially constant low pressure, arranged and constructed and operable substantially as hereinbefore described with reference to the accompanying drawings.

FIG.1

'Z'

'Y'

'X'

12

12a

9

13

13a

-13-

2

14

9d 9e 43 10 9b 9e 11 9c

37 28

39 20 24 23

26 30

6a

7a 7c

40 19

7 41 35 32

34 42

9a 6 -1- 3

2

12b 14 14a 5 4

0 236 608

<u>FIG.2</u>

FIG. 3

FIG. 10

FIG.4

FIG.5

FIG. 7

FIG. 8

FIG. 6

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 352 371 (WALTERS) <br> * Column 4, lines 13-68; columns 5,6 * <br><br> --- | 1 | F 16 K 31/34 |
| A | US-A-3 856 046 (BROWN) <br> * Whole document * <br><br> ----- | 1 | |

**TECHNICAL FIELDS SEARCHED (Int. Cl.4)**

F 16 K
E 03 B
G 05 D

The present search report has been drawn up for all claims

| Place of search | Date of completion of the search | Examiner |
|---|---|---|
| THE HAGUE | 13-11-1986 | HANNAART J.P. |